# EUROPEAN PATENT APPLICATION

(11) **EP 2 426 890 A2**
(43) Date of publication of application: **07.03.2012**
(21) Application number: 11180195.7
(22) Date of filing: 06.09.2011
(51) Int. Cl.: H04L 29/06

(54) **IP telephone set**

(30) Priority: 06.09.2010 JP 2010199122
(71) Applicant: Funai Electric Co., Ltd., Daito-shi, Osaka 574-0013 (JP)
(72) Inventor: Takeshita, Masahiro, Daito-shi, Osaka 574-0013 (JP)
(74) Representative: Grünecker, Kinkeldey, Stockmair & Schwanhäusser

(57) **Abstract**

This IP telephone set (3) includes a CPU (30) acquiring a MAC address (5a) of a personal computer (5) when the same is capable of communicating with the personal computer, while a server (1) previously registers an extension number (3b) corresponding to the IP telephone set. The CPU controls the server to register an extension number corresponding to the MAC address of the personal computer in association with the IP telephone set, thereby rendering the IP telephone set usable as a telephone set corresponding to the IP telephone set itself and a telephone set of the personal computer.

## Description

### BACKGROUND OF THE INVENTION

### Field of the Invention

The present invention relates to an IP telephone set, and more particularly, it relates to an IP telephone set capable of communicating with an extension telephone exchange.

### Description of the Background Art

An IP telephone set or the like capable of communicating with an extension telephone exchange is known in general, as disclosed in Japanese Patent Laying-Open No. 2005-252504, for example.

The aforementioned Japanese Patent Laying-Open No. 2005-252504 discloses an IP telephone system including an IP telephone set capable of communicating with an exchange (extension telephone exchange) through a personal computer (external apparatus). The IP telephone set of this IP telephone system is formed to be connectable with the personal computer through a serial bus, and formed to register a single extension number corresponding to the IP telephone set itself in the exchange by communicating with the exchange (extension telephone exchange) through the personal computer.

In the IP telephone system disclosed in the aforementioned Japanese Patent Laying-Open No. 2005-252504, however, the IP telephone set registers the single extension number corresponding to the IP telephone set itself in the exchange (extension telephone exchange) through the personal computer (external apparatus) so that the IP telephone set can interlock with the personal computer by employing the single extension number corresponding to the IP telephone set itself, while the IP telephone set cannot employ an extension number other than the single extension number corresponding to the IP telephone set itself.

### SUMMARY OF THE INVENTION

The present invention has been proposed in order to solve the aforementioned problem, and an object of the present invention is to provide an IP telephone set capable of corresponding to a plurality of extension numbers including an extension number of the IP telephone set itself.

An IP telephone set according to an aspect of the present invention includes a communication portion capable of communicating with an extension telephone exchange and a first external apparatus and a control portion acquiring first identification information of the first external apparatus through the communication portion when entering a state capable of communicating with the first external apparatus through the communication portion, while the extension telephone exchange previously registers a first extension number corresponding to the IP telephone set, and the control portion is formed to control the extension telephone exchange to additionally register a second extension number corresponding to the first identification information of the first external apparatus in association with the IP telephone set thereby controlling the IP telephone set to be usable also as an extension of the first external apparatus in addition to usage as an extension corresponding to the IP telephone set itself when entering the state capable of communicating with the first external apparatus through the communication portion.

In the IP telephone set according to the aspect of the present invention, as hereinabove described, the control portion controls the extension telephone exchange to additionally register the second extension number corresponding to the first identification information of the first external apparatus in association with the IP telephone set when entering the state capable of communicating with the first external apparatus through the communication portion thereby controlling the IP telephone set to be usable also as the extension of the first external apparatus in addition to the usage as the extension corresponding to the IP telephone set itself so that the IP telephone set can correspond not only to the first extension number corresponding to the IP telephone set itself but also to the second extension number corresponding to the first identification information of the first external apparatus, whereby the IP telephone set can correspond to a plurality of extension numbers including the extension number of the IP telephone set itself.

In the aforementioned IP telephone set according to the aspect, the control portion is preferably formed to transmit the first identification information of the first external apparatus to the extension telephone exchange through the communication portion thereby controlling the extension telephone exchange to additionally register the second extension number corresponding to the first identification information of the first external apparatus when entering the state capable of communicating with the first external apparatus through the communication portion. According to this structure, the control portion transmits the first identification information of the first external apparatus to the extension telephone exchange through the communication portion, whereby the extension telephone exchange can reliably recognize that the first external apparatus has been connected to the IP telephone set. Thus, the control portion can reliably control the extension telephone exchange to additionally register the second extension number corresponding to the first identification information of the first external apparatus.

In the aforementioned IP telephone set according to the aspect, the extension telephone exchange is preferably capable of storing the first identification information of the first external apparatus and the second extension number in association with each other, and the control portion is preferably formed to acquire an answer as to whether or not the second extension number corresponding to the first identification information of the first external apparatus exists from the extension telephone exchange and to control the extension telephone exchange to additionally register the second extension number in association with the IP telephone set when receiving an answer indicating that the second extension number exists. According to this structure, the extension telephone exchange can be prevented from registering an unintended extension number for an external apparatus not previously stored therein when the external apparatus, other than the first external apparatus, not previously stored in the extension telephone exchange is connected to the IP telephone set.

In this case, the control portion is preferably formed to acquire the answer as to whether or not the second extension number corresponding to the first identification information of the first external apparatus exists from the extension telephone exchange and not to control the extension telephone exchange to additionally register the second extension number in association with the IP telephone set when the second extension number is not stored in the extension telephone exchange. According to this structure, the control portion does not control the extension telephone exchange to additionally register the second extension number in association with the IP telephone set when an external apparatus, other than the first external apparatus, not previously stored in the extension telephone exchange is connected to the IP telephone set, whereby the extension telephone exchange can be reliably prevented from registering an unintended extension number for the external apparatus not previously stored in the extension telephone exchange.

In the aforementioned structure having the extension telephone exchange previously storing the first identification information of the first external apparatus and the second extension number in association with each other, the control portion is preferably formed not to control the extension telephone exchange to additionally register the second extension number in association with the IP telephone set after a lapse of a prescribed time when receiving no answer as to whether or not the second extension number exists from the extension telephone exchange. According to this structure, the control portion can be inhibited from stagnating the processing when the communication state between the IP telephone set and the extension telephone exchange is not satisfactory and no answer is received from the extension telephone exchange as to whether or not the second extension number exists within the prescribed time.

The aforementioned IP telephone set according to the aspect preferably further includes a storage portion previously storing the first identification information of the first external apparatus and the second extension number in association with each other, and the control portion is preferably formed to determine whether or not the second extension number corresponding to the first identification information of the first external apparatus exists on the basis of the second extension number corresponding to the first identification information stored in the storage portion and to control the extension telephone exchange to additionally register the second extension number in association with the IP telephone set when the second extension number exists. According to this structure, the extension telephone exchange can be prevented from registering an unintended extension number for an external apparatus not previously stored therein when the external apparatus, other than the first external apparatus, not previously stored in the extension telephone exchange is connected to the IP telephone set.

In the aforementioned IP telephone set according to the aspect, the control portion is preferably formed to control the IP telephone set not to be usable as an extension for the second extension number corresponding to the first identification information of the first external apparatus when the communication portion is shifted from a state capable of communicating with the first external apparatus to a state incapable of communicating with the first external apparatus. According to this structure, the IP telephone set can be prevented from receiving an incoming call corresponding to the first external apparatus when the first external apparatus is disconnected from the IP telephone set.

In this case, the control portion is preferably formed to determine that the communication portion has been shifted from the state capable of communicating with the first external apparatus to the state incapable of communicating with the first external apparatus and to control the IP telephone set not to be usable as an extension for the second extension number corresponding to the first identification information of the first external apparatus when the first external apparatus is disconnected from the communication portion of the IP telephone set. According to this structure, the IP telephone set can be prevented from receiving an incoming call corresponding to the first external apparatus when the first external apparatus is disconnected from the communication portion of the IP telephone set.

In the aforementioned structure having the control portion controlling the IP telephone set not to be usable as the extension for the second extension number corresponding to the first identification information of the first external apparatus when the communication portion has been shifted to the state incapable of communicating with the first external apparatus, the control portion is preferably formed to instruct the extension telephone exchange to deregister the second extension number corresponding to the first external apparatus thereby controlling the IP telephone set not to be usable as an extension for the second extension number corresponding to the first identification information of the first external apparatus when the communication portion is shifted from the state capable of communicating with the first external apparatus to the state incapable of communicating with the first external apparatus. According to this structure, the control portion instructs the extension telephone exchange to deregister the second extension number when the communication portion is shifted from the state capable of communicating with the first external apparatus to the state incapable of communicating with the first external apparatus, whereby the IP telephone set can be reliably prevented from receiving an incoming call corresponding to the first external apparatus when the first external apparatus is disconnected from the IP telephone set.

In the aforementioned IP telephone set according to the aspect, the communication portion is preferably formed to be capable of communicating with a second external apparatus different from the first external apparatus, and the control portion is preferably formed to control the extension telephone exchange to additionally register the second extension number corresponding to the first identification information of the first external apparatus and a third extension number corresponding to second identification information of the second external apparatus in association with the IP telephone set thereby controlling the IP telephone set to be usable also as extensions of the first external apparatus and the second external apparatus in addition to the usage as the extension corresponding to the IP telephone set itself when entering a state capable of communicating with both of the first external apparatus and the second external apparatus through the communication portion. According to this structure, the IP telephone set can correspond to both of the second and third extension numbers corresponding to the first and second external apparatuses respectively in addition to the first extension number corresponding thereto when both of the first and second external apparatuses are connected to the IP telephone set, whereby the IP telephone set can correspond to a plurality of extension numbers including the extension number of the IP telephone set itself and extension numbers of a plurality of external apparatuses.

In the aforementioned structure having the control portion formed to control the extension telephone exchange to additionally register the second extension number of the first external apparatus by transmitting the first identification information of the first external apparatus to the extension telephone exchange through the communication portion, the extension telephone exchange preferably previously stores the first identification information of the first external apparatus and a password in association with each other, and the control portion is preferably formed to transmit the first identification information of the first external apparatus to the extension telephone exchange through the communication portion and to control the extension telephone exchange to additionally register the second extension number corresponding to the first identification information of the first external apparatus with the password when entering the state capable of communicating with the first external apparatus through the communication portion. According to this structure, security is improved by the password when the control portion controls the extension telephone exchange to additionally register the second extension number, whereby the extension telephone exchange can be reliably prevented from registering an unintended extension number for any external apparatus.

In the aforementioned IP telephone set according to the aspect, the control portion is preferably formed to determine that the control portion has entered the state capable of communicating with the first external apparatus through the communication portion on the basis of that the first external apparatus has been connected to the communication portion. According to this structure, the control portion can easily determine that the same has entered the state capable of communicating with the first external apparatus through the communication portion for controlling the extension telephone exchange to additionally register the second extension number corresponding to the first identification information of the first external apparatus in association with the IP telephone set when the first external apparatus is simply connected to the communication portion.

In the aforementioned IP telephone set according to the aspect, the first identification information of the first external apparatus is preferably a MAC address. According to this structure, the control portion can control the extension telephone exchange to additionally register the second extension number corresponding to the MAC address of the first external apparatus in association with the IP telephone set.

In the aforementioned IP telephone set according to the aspect, the first external apparatus is preferably a computer. According to this structure, the IP telephone set can be used also as an extension of the computer.

In this case, the computer is preferably a portable computer. According to this structure, the IP telephone set can be used also as an extension of the easily carriable portable computer.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing the overall structure of an IP telephone system according to a first embodiment of the present invention;
Fig. 2 illustrates information of IP telephone sets and external apparatuses (personal computers or the like) previously stored in a server of the IP telephone system according to the first embodiment shown in Fig. 1 ;
Fig. 3 is a block diagram for illustrating the structure of any IP telephone set of the IP telephone system according to the first embodiment shown in Fig. 1;
Fig. 4 is a schematic diagram showing a state where a plurality of personal computers are connected to the IP telephone system according to the first embodiment shown in Fig. 1;
Fig. 5 is a flow chart for illustrating processing of setting extension numbers of the IP telephone sets of the IP telephone system according to the first embodiment shown in Fig. 1;
Fig. 6 is a flow chart for illustrating processing of collating MAC addresses and extension numbers with each other with the server of the IP telephone system according to the first embodiment shown in Fig. 1;
Fig. 7 is a flow chart for illustrating processing of resetting the extension numbers of the IP telephone sets of the IP telephone system according to the first embodiment shown in Fig. 1 ;
Fig. 8 illustrates information of external apparatuses (personal computers or the like) previously stored in a ROM of an IP telephone set of an IP telephone system according to a second embodiment of the present invention;
Fig. 9 is a block diagram for illustrating the structure of the IP telephone set of the IP telephone system according to the second embodiment of the present invention; and
Fig. 10 is a flow chart for illustrating processing of collating MAC addresses and extension numbers with each other with the IP telephone set of the IP telephone system according to the second embodiment of the present invention.

### DESCRIPTION OF THE PREFERRED EMBODIMENTS

Embodiments of the present invention are now described with reference to the drawings.

### (First Embodiment)

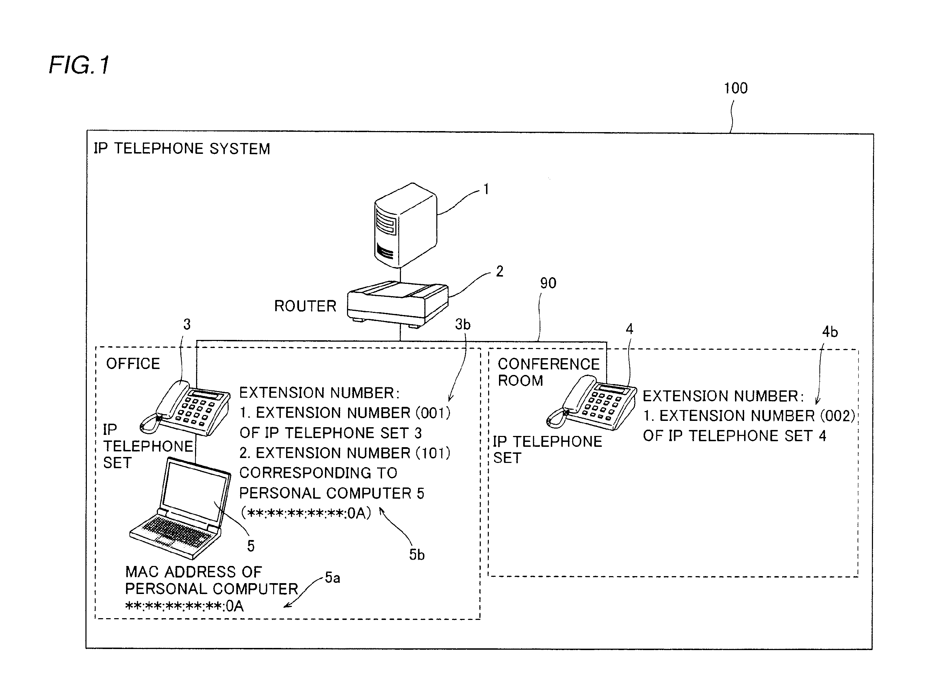

First, the structure of an IP telephone system 100 according to a first embodiment of the present invention is described with reference to Figs. 1 to 4.

The IP telephone system 100 according to the first embodiment of the present invention is constituted of a server 1 managing the IP telephone system 100, a router 2 connected with the server 1 and IP telephone sets 3 and 4 connected with the server 1 through the router 2, as shown in Fig. 1. The server 1 is an example of the "extension telephone exchange" in the present invention. The server 1, the router 2 and the IP telephone sets 3 and 4 are connected with each other through LAN cables 90, and capable of communicating with each other.

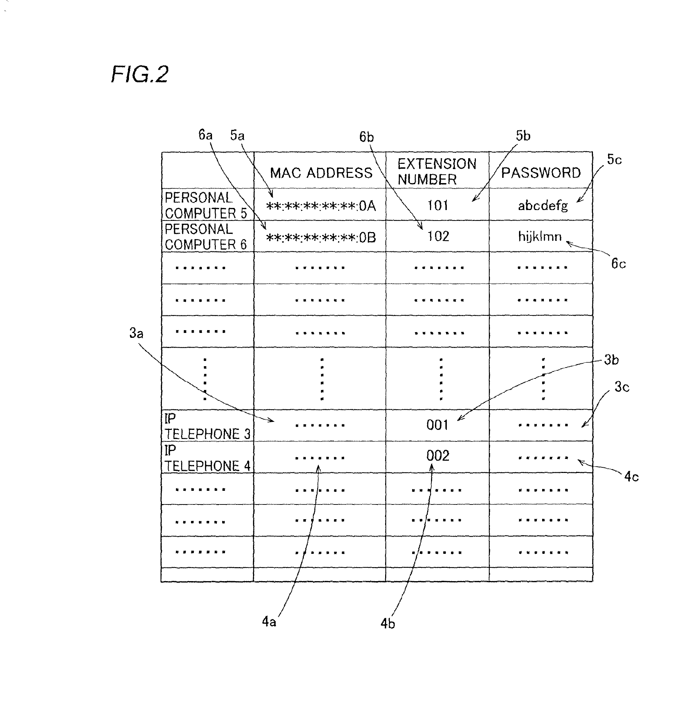

The server 1 has a function of receiving incoming calls and a function of putting through the incoming calls to the corresponding ones of the IP telephone sets 3 and 4. The server 1 also has an extension telephone exchange function. In other words, the server 1 has a function of controlling connection between the IP telephone sets 3 and 4 so that the users can make extension calls between the IP telephone sets 3 and 4. More specifically, the server 1 previously stores MAC addresses 3a and 4a of the IP telephone sets 3 and 4 described later, while also previously storing extension numbers 3b and 4b in association with the MAC addresses 3a and 4a, as shown in Fig. 2. The server 1 further previously stores passwords 3c and 4c for authenticating the IP telephone sets 3 and 4 connected to the IP telephone system 100.

As hereinabove described, the server 1 is formed to be capable of putting through the corresponding incoming call to the IP telephone set 3 or 4 having the previously stored extension number 3b or 4b on the basis of an operation of the corresponding user, as shown in Fig. 1. The extension numbers 3b and 4b are examples of the "first extension number" in the present invention. The server 1 is so formed, when the corresponding user makes an extension call from the IP telephone set 3 or 4 in the IP telephone system 100 to the other IP telephone set 4 or 3 having the other extension number 4b or 3b, as to connect the IP telephone set 3 or 4 making the extension call and the IP telephone set 4 or 3 receiving the extension call with each other.

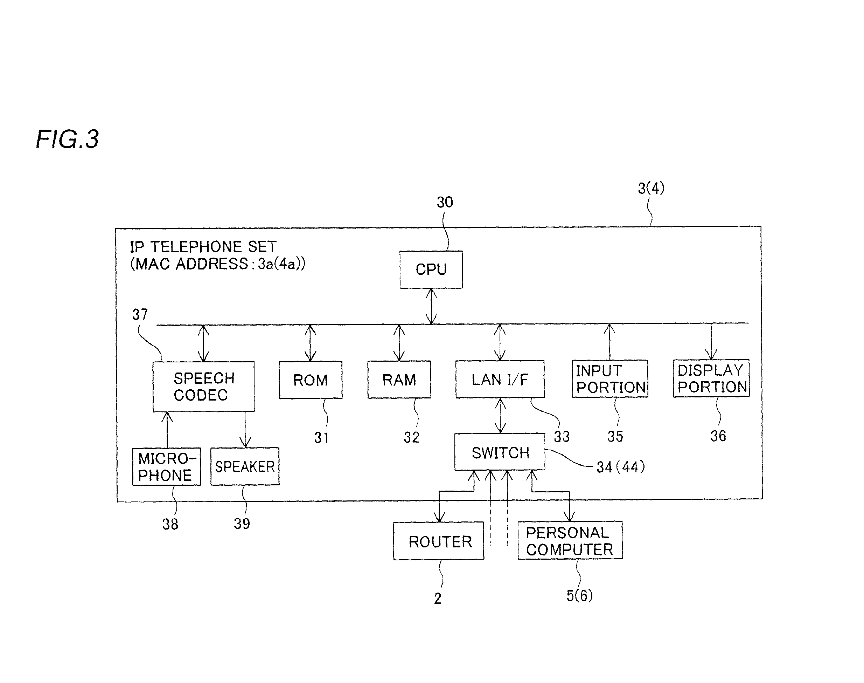

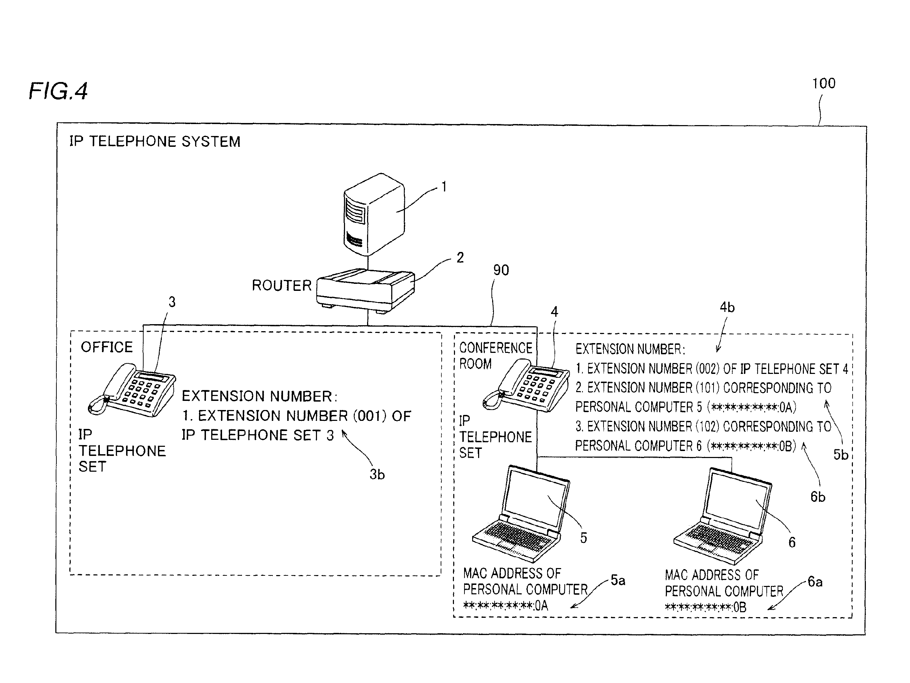

The server 1 further previously stores MAC addresses 5a and 6a of personal computers 5 and 6 (see Fig. 3) connected to a switch 34 or 44 (see Fig. 3) of the IP telephone set 3 or 4, in addition to the MAC addresses 3a and 4a of the IP telephone sets 3 and 4, as shown in Fig. 2. The personal computers 5 and 6 are examples of the "first external apparatus" and the "second external apparatus" in the present invention respectively. The MAC addresses 5a and 6a are examples of the "first identification information" and the "second identification information" in the present invention respectively. The server 1 also previously stores extension numbers 5b and 6b in association with the MAC addresses 5a and 6a of the personal computers 5 and 6 (see Fig. 3) connected to the switch 34 or 44 of the IP telephone set 3 or 4. The extension numbers 5b and 6b are examples of the "second extension number" and the "third extension number" in the present invention respectively. The server 1 further previously stores passwords 5c and 6c for authenticating the personal computers 5 and 6 (see Fig. 4) connected to the IP telephone set 3 or 4.

The router 2 has a function of allocating connection between the server 1 and the IP telephone sets 3 and 4.

According to the first embodiment, the IP telephone set 3 includes a CPU (control portion) 30 controlling the IP telephone set 3, a ROM 31 storing a communication control program etc., a RAM 32, a LAN I/F (LAN interface) 33 capable of communicating with a LAN (local area network) and the switch 34 switching LAN connection with a plurality of external apparatuses (personal computers 5 and 6) and the router 2. The CPU 30 is an example of the "control portion" in the present invention. The LAN I/F 33 and the switch 34 are examples of the "communication portion" in the present invention. The IP telephone set 3 further includes an input portion 35 employed by the corresponding user for inputting a telephone number etc., a display portion 36 making an operation display of the IP telephone set 3, a speech codec 37 converting an analog speech signal to a digital speech signal, a microphone 38 and a speaker 39.

The switch 34 of the IP telephone set 3 has LAN ports (not shown) for four telephone lines, and is formed to be directly connectable to four LAN cables 90 at a maximum. In other words, the switch 34 is formed to be capable of communicating not only with the personal computer 5, but also with the personal computer 6 different from the personal computer 5.

According to the first embodiment, the CPU 30 of the IP telephone set 3 is formed to acquire the MAC address 5a of the personal computer 5 through the switch 34 when entering a state capable of communicating with the personal computer 5 through the switch 34. Further, the CPU 30 is formed to control the server 1 to additionally register the extension number 5b corresponding to the MAC address 5a of the personal computer 5 in association with the IP telephone set 3 when entering the state capable of communicating with the personal computer 5 through the switch 34. In other words, the CPU 30 is formed to control the IP telephone set 3 to be usable also as an extension of the personal computer 5 in addition to usage as an extension corresponding to the IP telephone set 3 itself. Thus, when the CPU 30 enters the state capable of communicating with the personal computer 5 through the switch 34, the user can receive incoming extension calls on the single IP telephone set 3 with both of the extension number 3b corresponding to the IP telephone set 3 and the extension number 5b corresponding to the personal computer 5. In other words, the user can receive incoming calls to two extension numbers 001 and 101 with the IP telephone set 3 in this case.

According to the first embodiment, the CPU 30 of the IP telephone set 3 is formed to acquire an answer as to whether or not the extension number 5b corresponding to the MAC address 5a of the personal computer 5 exists from the server 1 when entering the state capable of communicating with the personal computer 5 through the switch 34. Further, the CPU 30 is formed to control the server 1 to additionally register the extension number 5b corresponding to the personal computer 5 in association with the IP telephone set 3 when receiving an answer indicating that the extension number 5b exists. In other words, the server 1 is formed not to additionally register an extension number of a personal computer not previously stored therein when this personal computer is connected to the IP telephone system 100.

According to the first embodiment, the CPU 30 is formed to acquire both of the MAC addresses 5a and 6a of the personal computers 5 and 6 through the switch 34 when entering a state capable of communicating with both of the personal computers 5 and 6 through the switch 34. Further, the CPU 30 is formed to control the server 1 to additionally register the extension numbers 5b and 6b corresponding to the MAC addresses 5a and 6a of the personal computers 5 and 6 respectively in association with the IP telephone set 3 when entering the state capable of communicating with both of the personal computers 5 and 6 through the switch 34. In other words, the CPU 30 is formed to control the IP telephone set 3 to be usable also as extensions of the personal computers 5 and 6 in addition to the usage as the extension corresponding to the IP telephone set 3 itself. Thus, when the CPU 30 enters the state capable of communicating with both of the personal computers 5 and 6 through the switch 34, the user can receive incoming extension calls on the single IP telephone set 3 with the three the extension numbers 3b, 5b and 6b corresponding to the IP telephone set 3 and the personal computers 5 and 6 respectively. In other words, the user can receive incoming calls to three extension numbers 001, 101 and 102 with the IP telephone set 3.

The CPU 30 is formed to control the extension corresponding to the extension number 5b corresponding to the MAC address 5a of the personal computer 5 when the switch 34 is shifted from the state capable of communicating with the personal computer 5 to a state incapable of communicating with the same. In other words, the CPU 30 is formed to control the server 1 to make deregistration when the personal computers 5 and 6 are disconnected from the switch 34, so that the IP telephone set 3 does not receive incoming calls to the extension numbers 5b and 6b corresponding to the personal computers 5 and 6.

According to the first embodiment, the IP telephone set 4 is similar in structure to the IP telephone set 3, as shown in Fig. 3. In other words, the user can receive incoming calls to the extension numbers 5b and 6b corresponding to the personal computers 5 and 6 with the IP telephone set 4 in addition to the extension number 4b corresponding to the IP telephone set 4 as shown in Fig. 4, also when the external apparatuses (personal computers 5 and 6, for example) are connected to the IP telephone set 4.

Processing of setting extension numbers in the IP telephone set 3 according to the first embodiment is now described with reference to Figs. 1 to 5.

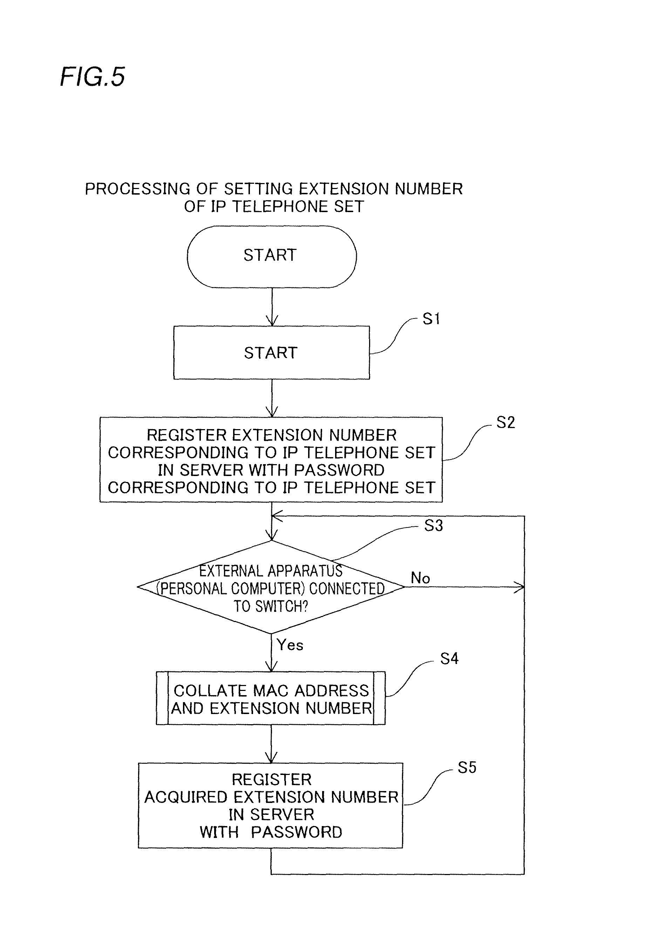

First, the user starts the IP telephone set 3 at a step S1, as shown in Fig. 5. Thereafter the CPU 30 (see Fig. 3) controls the server 1 (see Fig. 1) to register the extension number 3b corresponding to the IP telephone set 3 at a step S2. In this case, the CPU 30 transmits the password 3c (see Fig. 2) of the IP telephone set 3 to the server 1. When receiving the password 3c of the IP telephone set 3, the server 1 recognizes that the IP telephone set 3 has been connected to the IP telephone system 100, and registers the extension number 3b corresponding to the IP telephone set 3 in itself. Thus, the IP telephone set 3 allows the user to make extension calls with the extension number 3b thereof.

Thereafter the CPU 30 determines whether or not the external apparatuses such as the personal computers 5 and 6 have been connected to the switch 34 at a step S3. If determining that the external apparatuses such as the personal computers 5 and 6 have been connected to the switch 34 at the step S3, the CPU 30 advances to a step S4. The CPU 30 repeats the determination at the step S3 until the same determines that the external apparatuses such as the personal computers 5 and 6 (see Fig. 3) have been connected to the switch 34 at the step S3.

Thereafter the CPU 30 performs processing, described later, of collating MAC addresses and extension numbers with each other at the step S4, and advances to a step S5. At the step S5, the CPU 30 controls the serve 1 to register the extension numbers (5b and 6b, for example) of the external apparatuses (personal computers 5 and 6, for example) acquired at the step S4 with the passwords (5c and 6c, for example) of the external apparatuses (personal computers 5 and 6, for example). In this case, the CPU 30 transmits the passwords of the external apparatuses to the server 1. When receiving the passwords of the external apparatuses, the server 1 recognizes that the external apparatuses have been connected to the IP telephone set 3, and registers the extension numbers corresponding to the external apparatuses in itself. Thus, the IP telephone set 3 allows the user to make extension calls with the extension numbers (5b and 6b, for example) of the external apparatuses (personal computers 5 and 6, for example).

Thereafter the CPU 30 returns to the step S3, in order to determine whether or not still another external apparatus has been connected to the switch 34 in addition to the connected external apparatuses.

The processing of collating the MAC addresses and the extension numbers with each other with the server 1 according to the first embodiment is now described with reference to Figs. 1 to 6.

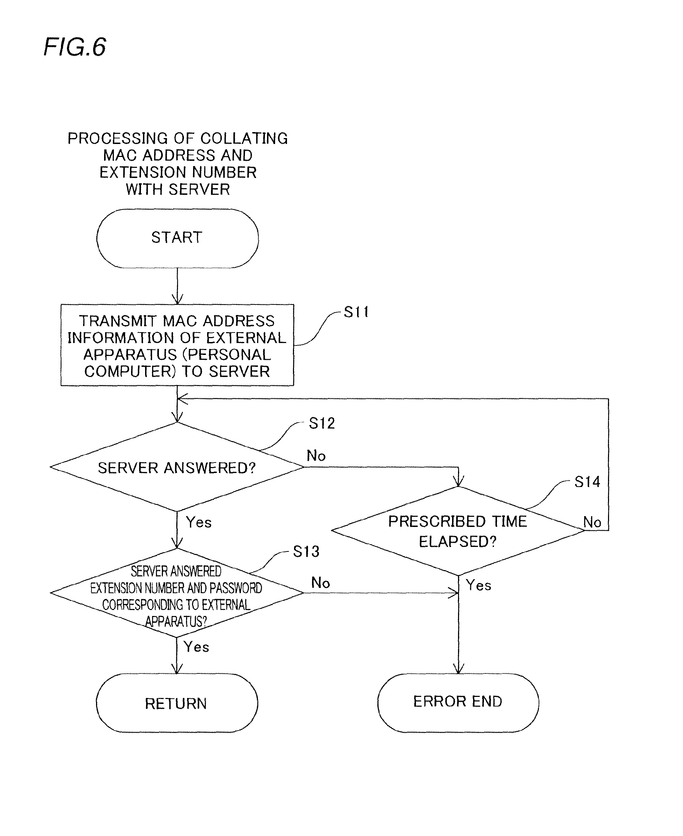

First, the CPU 30 (see Fig. 3) transmits information about the MAC addresses (5a and 6a, for example) of the external apparatuses (personal computers 5 and 6, for example) determined as having been connected to the switch 34 at the step S3 in Fig. 5 to the server 1 (see Fig. 1) through the switch S34 at a step S11, as shown in Fig. 6. Thereafter the CPU 30 determines whether or not the server 1 has answered to the information about the connected external apparatuses (personal computers 5 and 6, for example) at a step S12.

If determining that the server 1 has answered to the information about the connected external apparatuses (personal computers 5 and 6, for example) at the step S12, the CPU 30 advances to a step S13. At the step S13, the CPU 30 determines whether or not the server 1 has answered the extension numbers (5b and 6b, for example) and the passwords (5c and 6c (see Fig. 2), for example) corresponding to the connected external apparatuses (personal computers 5 and 6, for example) as the answer to the information about the connected external apparatuses (personal computers 5 and 6, for example). If determining that the server 1 has answered the extension numbers (5b and 6b, for example) and the passwords (5c and 6c, for example) corresponding to the connected external apparatuses (personal computers 5 and 6 (see Fig. 4), for example) at the step S13, the CPU 30 advances to the step S5 shown in Fig. 5, and terminates the processing of collating the MAC addresses and the extension numbers with each other with the server 1. If determining that the server 1 has not answered the extension numbers (5b and 6b, for example) and the passwords (5c and 6c, for example) corresponding to the connected external apparatuses (personal computers 5 and 6, for example) at the step S13, on the other hand, the CPU 30 error-ends the processing. In other words, the CPU 30 does not control the server 1 to additionally register the extension numbers corresponding to the connected external apparatuses in association with the IP telephone set 3 when determining that the server 1 has not answered the extension numbers (5b and 6b, for example) and the passwords (5c and 6c, for example) corresponding to the connected external apparatuses (personal computers 5 and 6, for example).

If determining that the server 1 has not answered to the information about the connected external apparatuses (personal computers 5 and 6, for example) at the step S12, the CPU 30 advances to a step S14. At the step S14, the CPU 30 determines whether or not a prescribed time has elapsed after the transmission of the information about the MAC addresses (5a and 6a, for example) of the connected external apparatuses (personal computers 5 and 6, for example) to the server 1. If determining that the prescribed time has not yet elapsed after the transmission of the information about the MAC addresses (5a and 6a, for example) to the server 1 (see Fig. 1) at the step S14, the CPU 30 returns to the step S12. If determining that the prescribed time has elapsed after the transmission of the information about the MAC addresses (5a and 6a, for example) to the server 1 (see Fig. 1) at the step S14, on the other hand, the CPU 30 error-ends the processing. In other words, the CPU 30 does not control the server 1 to additionally register the extension numbers (5b and 6b, for example) corresponding to the connected external apparatuses in association with the IP telephone set 3 upon a lapse of the prescribed time after the transmission of the information about the MAC addresses (5a and 6a, for example) to the server 1 (see Fig. 1) when determining that the server 1 has not answered to the information about the connected external apparatuses (personal computers 5 and 6, for example).

Processing of resetting the extension numbers in the IP telephone set 3 according to the first embodiment is now described with reference to Figs. 1 to 4 and 7.

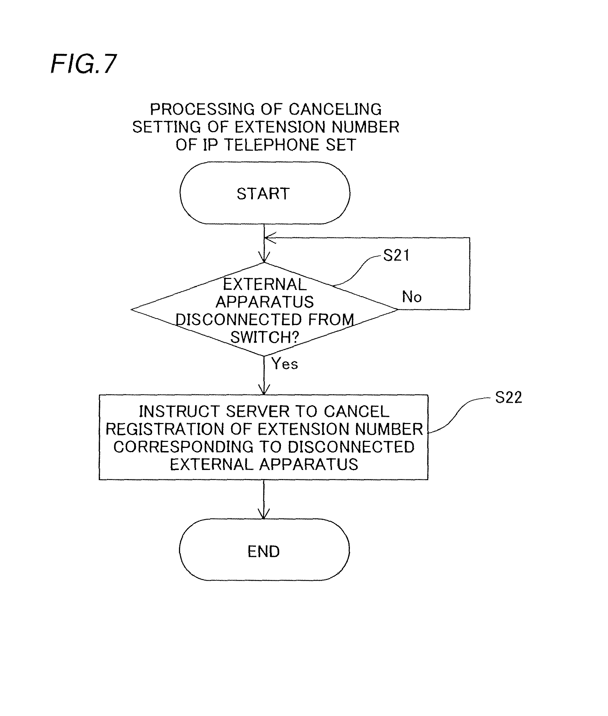

First, the CPU 30 (see Fig. 3) determines whether or not the external apparatuses (personal computers 5 and 6 (see Fig. 4) or the like) have been disconnected from the switch 34 of the IP telephone set 3 at a step S21, as shown in Fig. 7. If determining that the external apparatuses (personal computers 5 and 6 or the like) have been disconnected from the switch 34 at the step S21, the CPU 30 advances to a step S22. The CPU 30 repeats this determination until the same determines that the external apparatuses (personal computers 5 and 6 or the like) have been disconnected from the switch 34 at the step S21.

Thereafter the CPU 30 transmits an instruction for deregistering the extension numbers (5b and 6b (see Fig. 2), for example) corresponding to the disconnected external apparatuses (personal computers 5 and 6, for example) to the server 1 (see Fig. 1) at the step S22, and terminates the processing of resetting the extension numbers in the IP telephone set 3.

According to the first embodiment, as hereinabove described, the CPU 30 controls the server 1 to additionally register the extension number 5b corresponding to the MAC address 5a of the personal computer 5 in association with the IP telephone set 3 when entering the state capable of communicating with the personal computer 5 through the switch 34 thereby controlling the IP telephone set 3 to be usable also as the extension of the personal computer 5 in addition to the usage as the extension corresponding to the IP telephone set 3 itself so that the IP telephone set 3 can correspond not only to the extension number 3b corresponding to itself but also to the extension number 5b corresponding to the MAC address 5a of the personal computer 5, whereby the IP telephone set 3 can correspond to a plurality of extension numbers (3b and 5b) including the extension number of itself.

According to the first embodiment, as hereinabove described, the CPU 30 transmits the MAC address 5a of the personal computer 5 to the server 1 through the switch 34 when entering the state capable of communicating with the personal computer 5 through the switch 34 thereby controlling the server 1 to additionally register the extension number 5b corresponding to the MAC address 5a of the personal computer 5. Thus, the CPU 30 transmits the MAC address 5a of the personal computer 5 to the server 1 through the switch 34, whereby the server 1 can reliably recognize that the personal computer 5 has been connected to the IP telephone set 3. Thus, the CPU 30 can reliably control the server 1 to additionally register the extension number 5b corresponding to the MAC address 5a of the personal computer 5.

According to the first embodiment, as hereinabove described, the CPU 30 acquires the answer as to whether or not the extension number 5b corresponding to the MAC address 5a of the personal computer 5 exists and controls the server 1 to additionally register the extension number 5b in association with the IP telephone set 3 when receiving the answer indicating that the extension number 5b exists, whereby the CPU 30 can prevent the server 1 from registering an unintended extension number for an external apparatus not previously stored therein when the external apparatus, other than the personal computer 5, not stored in the server 1 is connected to the IP telephone set 3.

According to the first embodiment, as hereinabove described, the CPU 30 is formed not to control the server 1 to additionally register the extension number 5b in association with the IP telephone set 3 when the extension number 5b is not stored in the server 1. When an external apparatus, other than the personal computer 5, not previously stored in the server 1 is connected to the IP telephone set 3, therefore, the server 1 can be prevented from registering the unintended extension number 5b for the external apparatus not previously stored therein since the extension number 5b is not additionally registered therein in association with the IP telephone set 3.

According to the first embodiment, as hereinabove described, the CPU 30 is formed not to control the server 1 to additionally register the extension number 5b in association with the IP telephone set 3 after a lapse of the prescribed time when receiving no answer from the server 1 as to whether or not the extension number 5b exists, whereby the CPU 30 can be inhibited from stagnating the processing when the communication state between the IP telephone set 3 and the server 1 is not satisfactory and no answer is received from the server 1 as to whether or not the extension number 5b exists within the prescribed time.

According to the first embodiment, as hereinabove described, the CPU 30 controls the IP telephone set 3 not to be usable as the extension for the extension number 5b corresponding to the MAC address 5a of the personal computer 5 when the switch 34 is shifted from the state capable of communicating with the personal computer 5 to the state incapable of communicating with the same. When the personal computer 5 is disconnected from the IP telephone set 3, therefore, the IP telephone set 3 can be prevented from receiving an incoming call corresponding to the disconnected personal computer 5.

According to the first embodiment, as hereinabove described, the CPU 30 is formed to determine that the switch 34 has been shifted from the state capable of communicating with the personal computer 5 to the state incapable of communicating with the same when the personal computer 5 has been disconnected from the switch 34 of the IP telephone set 3 and to control the IP telephone set 3 not to be usable as the extension for the extension number 5b corresponding to the MAC address 5a of the personal computer 5. When the personal computer 5 is disconnected from the switch 34 of the IP telephone set 3, therefore, the IP telephone set 3 can be reliably prevented from receiving an incoming call corresponding to the disconnected personal computer 5.

According to the first embodiment, as hereinabove described, the CPU 30 is formed to transmit the instruction for deregistering the extension number 5b corresponding to the personal computer 5 to the server 1 when the switch 34 is shifted from the state capable of communicating with the personal computer 5 to the state incapable of communicating with the same thereby controlling the IP telephone set 3 not to be usable as the extension for the extension number 5b corresponding to the MAC address 5a of the personal computer 5, so that the CPU 30 controls the server 1 to deregister the extension number 5b when the switch 34 is shifted from the state capable of communicating with the personal computer 5 to the state incapable of communicating with the same. When the personal computer 5 is disconnected from the IP telephone set 3, therefore, the IP telephone set 3 can be reliably prevented from receiving an incoming call to the disconnected personal computer 5.

According to the first embodiment, as hereinabove described, the CPU 30 controls the server 1 to additionally register the extension numbers 5b and 6b corresponding to the MAC addresses 5a and 6a of the personal computers 5 and 6 in association with the IP telephone set 3 when entering the state capable of communicating with both of the personal computers 5 and 6 through the switch 34 thereby controlling the IP telephone set 3 to be usable also as the extensions of the personal computers 5 and 6 in addition to the usage as the extension corresponding to the P telephone set 3 itself. When both of the personal computers 5 and 6 are connected to the IP telephone set 3, therefore, the IP telephone set 3 can correspond to both of the extension numbers 5b and 6b corresponding to the personal computers 5 and 6 in addition to the extension number 3b corresponding to the IP telephone set 3, thereby corresponding to a plurality of extension numbers including the extension number 3b corresponding to the IP telephone set 3 itself and the extension numbers (5b and 6b) of the plurality of external apparatuses (personal computers 5 and 6).

According to the first embodiment, as hereinabove described, the server 1 previously stores the MAC address 5a and the password 5c of the personal computer 5 in association with each other, and the CPU 30 is formed to transmit the MAC address 5a to the server 1 through the switch 34 and to control the server 1 to additionally register the extension number 5b corresponding to the MAC address 5a of the personal computer 5 with the password 5c when entering the state capable of communicating with the personal computer 5 through the switch 34. When the CPU 30 controls the server 1 to additionally register the extension number 5b, therefore, security is improved through the password 5c, whereby the server 1 can be reliably prevented from registering the unintended extension number 5b for any external apparatus.

According to the first embodiment, as hereinabove described, the CPU 30 is formed to determine that the same has entered the state capable of communicating with the personal computer 5 through the switch 34 on the basis of that the personal computer 5 has been connected to the switch 34. When the personal computer 5 is simply connected to the switch 34, therefore, the CPU 30 can easily determine that the same has entered the state capable of communicating with the personal computer 5 through the switch 34 for controlling the server 1 to additionally register the extension number 5b corresponding to the MAC address 5a of the personal computer 5 in association with the IP telephone set 3.

According to the first embodiment, as hereinabove described, the MAC address 5a of the personal computer 5 is employed as first identification information in the present invention, whereby the CPU 30 can control the server 1 to additionally register the extension number 5b corresponding to the MAC address 5a of the personal computer 5 in association with the IP telephone set 3.

### (Second Embodiment)

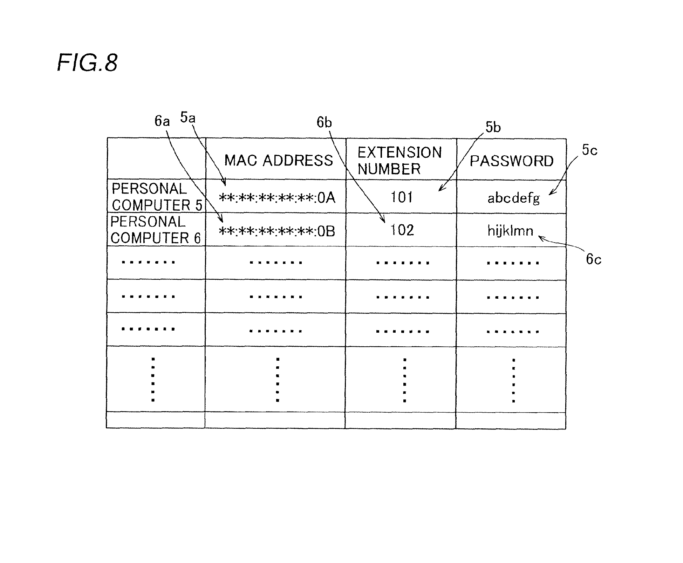

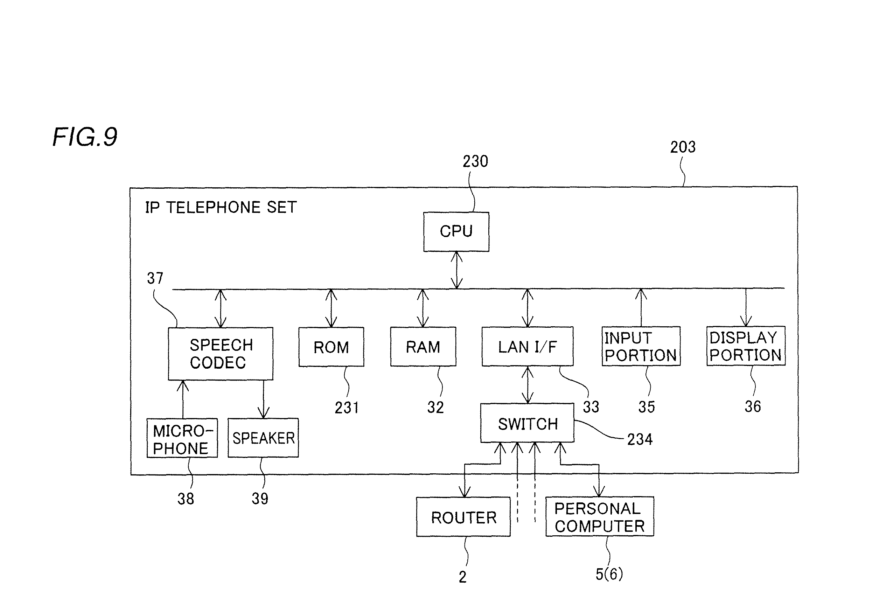

An IP telephone system according to a second embodiment of the present invention is now described with reference to Figs. 8 and 9. According to the second embodiment, an IP telephone set 203 previously stores information about external apparatuses such as personal computers, dissimilarly to the aforementioned first embodiment in which the server 1 previously stores the information about the external apparatuses such as the personal computers.

A ROM 231 (see Fig. 9) of the IP telephone set 203 of the IP telephone system according to the second embodiment of the present invention previously stores MAC addresses 5a and 6a of personal computers 5 and 6 connected to a switch 234 (see Fig. 9) of the IP telephone set 203, as shown in Fig. 8. The ROM 231 is an example of the "storage portion" in the present invention. The ROM 231 also previously stores extension numbers 5b and 6b in association with the MAC addresses 5a and 6a of the personal computers 5 and 6 connected to the switch 234 of the IP telephone set 203. The ROM 231 further previously stores passwords 5c and 6c for authenticating the personal computers 5 and 6 connected to the switch 234 of the IP telephone set 203.

According to the second embodiment, a CPU 230 of the IP telephone set 203 is formed to determine whether or not the extension number 5b corresponding to the MAC address 5a of the personal computer 5 exists on the basis of the extension number 5b corresponding to the MAC address 5a previously stored in the ROM 231 when entering a state capable of communicating with the personal computer 5 through the switch 234. Further, the CPU 230 is so formed, when determining that the extension number 5b exists in the ROM 231, as to control a server 1 to additionally register the extension number 5b corresponding to the personal computer 5 in association with the IP telephone set 203. In other words, the CPU 230 does not control the server 1 to additionally register any extension number of any personal computer if no extension number corresponding to any external apparatus (personal computer) is previously stored in the IP telephone set 203 of the IP telephone system according to the second embodiment.

The remaining structure of the second embodiment is similar to that of the aforementioned embodiment.

Processing of collating MAC addresses and extension numbers with each other with the IP telephone set 203 according to the second embodiment is now described with reference to Figs. 8 to 10. Processing of setting extension numbers with the IP telephone set 203 according to the second embodiment is similar to that in the aforementioned first embodiment.

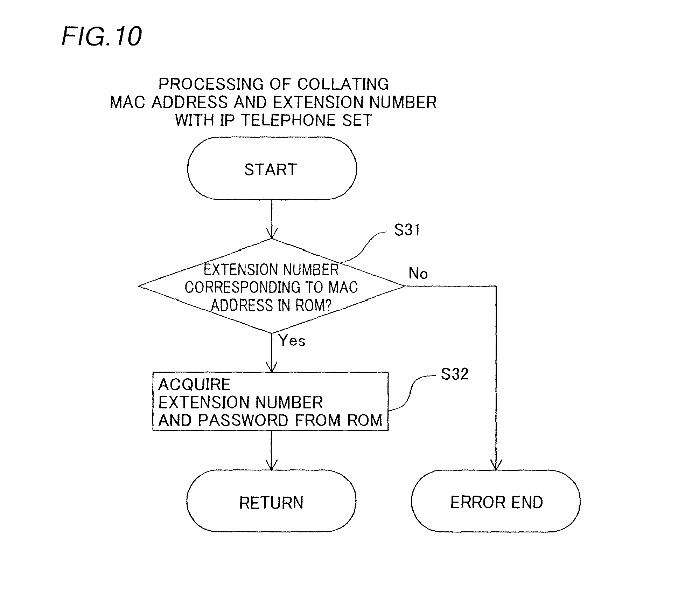

As shown in Fig. 10, the CPU 231 determines whether or not the ROM 231 previously stores extension numbers (5b and 6b (see Fig. 8), for example) corresponding to MAC addresses (5a and 6a, for example) of external apparatuses (personal computers 5 and 6, for example) determined as connected to the IP telephone set 203 at a step similar to the step S3 in Fig. 5 at a step S31. If determining that the ROM 231 does not previously store the extension numbers (5b and 6b (see Fig. 8), for example) corresponding to the MAC addresses (5a and 6a, for example) of the external apparatuses (personal computers 5 and 6, for example) connected to the IP telephone set 203 at the step S31, the CPU 230 error-ends the processing.

If determining that the ROM 231 previously stores the extension numbers (5b and 6b (see Fig. 8), for example) corresponding to the MAC addresses (5a and 6a, for example) of the external apparatuses (personal computers 5 and 6, for example) connected to the IP telephone set 203 at the step S31, on the other hand, the CPU 230 advances to a step S32. At the step S32, the CPU 230 acquires the extension numbers (5b and 6b (see Fig. 8), for example) and the passwords (5c and 6c (see Fig. 8), for example) corresponding to the external apparatuses (personal computers 5 and 6, for example) connected to the IP telephone set 203 from the ROM 231, and terminates the processing of collating the MAC addresses and the extension numbers with each other with the IP telephone set 203.

According to the second embodiment, as hereinabove described, the CPU 230 determines whether or not the extension number 5b corresponding to the MAC address 5a of the personal computer 5 exists on the basis of the extension number 5b corresponding to the MAC address 5a stored in the ROM 231 and controls the server 1 to additionally register the extension number 5b in association with the IP telephone set 203 when the extension number 5b exists. When an external apparatus, other than the personal computer 5, not previously stored in the ROM 231 is connected to the IP telephone set 203, therefore, the server 1 can be prevented from registering an unintended extension number for the external apparatus, other than the personal computer 5, not previously stored in the ROM 231.

Although the present invention has been described and illustrated in detail, it is clearly understood that the same is by way of illustration and example only and is not to be taken by way of limitation, the spirit and scope of the present invention being limited only by the terms of the appended claims.

For example, while the personal computer as an example of the first external apparatus is employed in each of the aforementioned first and second embodiments, the present invention is not restricted to this. The first external apparatus may simply be an electronic apparatus connectable to the IP telephone set. For example, a portable terminal such as a portable telephone, a tablet PC or a smartphone, for example, other than the personal computer may alternatively be connected to the IP telephone set so that the IP telephone set is usable also as an extension of the portable terminal other than the personal computer. Further alternatively, a portable computer such as a notebook computer may be employed as an example of the first external apparatus.

While the IP telephone set is formed to be capable of communicating with the personal computers through the LAN cables in each of the aforementioned first and second embodiments, the present invention is not restricted to this. For example, the IP telephone set may alternatively be connected with the personal computers through a wireless LAN to be capable of communicating with the personal computers, or may further alternatively be connected with the personal computers through serial bus cables, such as USB cables, other than the LAN cables to be capable of communicating with the personal computers.

While the MAC addresses are employed as the identification information of the external apparatuses (personal computers) connected to the IP telephone set in each of the aforementioned first and second embodiments, the present invention is not restricted to this. For example, IP addresses may alternatively be employed as the identification information of the external apparatuses (personal computers) connected to the IP telephone set.

While the switch is provided with the LAN ports for four telephone lines in each of the aforementioned first and second embodiments, the present invention is not restricted to this. The switch may alternatively be provided with LAN ports for two or three telephone lines, or LAN ports for at least five telephone lines.

While the CPU 30 or 230 controls the server 1 to additionally register the two extension numbers corresponding to the personal computers 5 and 6 thereby controlling the IP telephone set 3 or 4 to be usable also as the extensions of the personal computers 5 and 6 in addition to the usage as the extension using the extension number of the IP telephone set 3 or 4 itself in each of the aforementioned first and second embodiments, the present invention is not restricted to this. Still another external apparatus, other than the personal computers 5 and 6, may be further connected to the IP telephone set 3 or 4 in addition to the personal computers 5 and 6 so that the IP telephone set 3 or 4 is usable as extensions of the personal computers 5 and 6 and the external apparatus other than the personal computers 5 and 6 in addition to the usage as the extension using the extension number of the IP telephone set 3 or 4 itself, so far as the external apparatus is previously stored in the server or the IP telephone set.

## Claims

1. An IP telephone set (3) comprising:
a communication portion (33, 34) capable of communicating with an extension telephone exchange (1) and a first external apparatus (5); and
a control portion (30) acquiring first identification information (5a) of said first external apparatus through said communication portion when entering a state capable of communicating with said first external apparatus through said communication portion, wherein
said extension telephone exchange previously registers a first extension number (3b) corresponding to said IP telephone set, and
said control portion is formed to control said extension telephone exchange to additionally register a second extension number (5b) corresponding to said first identification information of said first external apparatus in association with said IP telephone set thereby controlling said IP telephone set to be usable also as an extension of said first external apparatus in addition to usage as an extension corresponding to said IP telephone set itself when entering said state capable of communicating with said first external apparatus through said communication portion.

2. The IP telephone set according to claim 1, wherein said control portion is formed to transmit said first identification information of said first external apparatus to said extension telephone exchange through said communication portion thereby controlling said extension telephone exchange to additionally register said second extension number corresponding to said first identification information of said first external apparatus when entering said state capable of communicating with said first external apparatus through said communication portion.

3. The IP telephone set according to claim 1, wherein said extension telephone exchange is capable of storing said first identification information of said first external apparatus and said second extension number in association with each other, and
said control portion is formed to acquire an answer as to whether or not said second extension number corresponding to said first identification information of said first external apparatus exists from said extension telephone exchange and to control said extension telephone exchange to additionally register said second extension number in association with said IP telephone set when receiving an answer indicating that said second extension number exists.

4. The IP telephone set according to claim 3, wherein said control portion is formed to acquire said answer as to whether or not said second extension number corresponding to said first identification information of said first external apparatus exists from said extension telephone exchange and not to control said extension telephone exchange to additionally register said second extension number in association with said IP telephone set when said second extension number is not stored in said extension telephone exchange.

5. The IP telephone set according to claim 3, wherein said control portion is formed not to control said extension telephone exchange to additionally register said second extension number in association with said IP telephone set after a lapse of a prescribed time when receiving no answer as to whether or not said second extension number exists from said extension telephone exchange.

6. The IP telephone set according to claim 1, further comprising a storage portion (231) previously storing said first identification information of said first external apparatus and said second extension number in association with each other, wherein
said control portion is formed to determine whether or not said second extension number corresponding to said first identification information of said first external apparatus exists on the basis of said second extension number corresponding to said first identification information stored in said storage portion and to control said extension telephone exchange to additionally register said second extension number in association with said IP telephone set when said second extension number exists.

7. The IP telephone set according to claim 1, wherein said control portion is formed to control said IP telephone set not to be usable as an extension for said second extension number corresponding to said first identification information of said first external apparatus when said communication portion is shifted from a state capable of communicating with said first external apparatus to a state incapable of communicating with said first external apparatus.

8. The IP telephone set according to claim 7, wherein said control portion is formed to determine that said communication portion has been shifted from said state capable of communicating with said first external apparatus to said state incapable of communicating with said first external apparatus and to control said IP telephone set not to be usable as an extension for said second extension number corresponding to said first identification information of said first external apparatus when said first external apparatus is disconnected from said communication portion of said IP telephone set.

9. The IP telephone set according to claim 7, wherein said control portion is formed to instruct said extension telephone exchange to deregister said second extension number corresponding to said first external apparatus thereby controlling said IP telephone set not to be usable as an extension for said second extension number corresponding to said first identification information of said first external apparatus when said communication portion is shifted from said state capable of communicating with said first external apparatus to said state incapable of communicating with said first external apparatus.

10. The IP telephone set according to claim 1,
wherein
said communication portion is formed to be capable of communicating with a second external apparatus (6) different from said first external apparatus, and
said control portion is formed to control said extension telephone exchange to additionally register said second extension number corresponding to said first identification information of said first external apparatus and a third extension number (6b) corresponding to second identification information (6a) of said second external apparatus in association with said IP telephone set thereby controlling said IP telephone set to be usable also as extensions of said first external apparatus and said second external apparatus in addition to the usage as said extension corresponding to said IP telephone set itself when entering a state capable of communicating with both of said first external apparatus and said second external apparatus through said communication portion.

11. The IP telephone set according to claim 2,
wherein
said extension telephone exchange previously stores said first identification information of said first external apparatus and a password (5c) in association with each other, and
said control portion is formed to transmit said first identification information of said first external apparatus to said extension telephone exchange through said communication portion and to control said extension telephone exchange to additionally register said second extension number corresponding to said first identification information of said first external apparatus with said password when entering said state capable of communicating with said first external apparatus through said communication portion.

12. The IP telephone set according to claim 1,
wherein
said control portion is formed to determine that said control portion has entered said state capable of communicating with said first external apparatus through said communication portion on the basis of that said first external apparatus has been connected to said communication portion.

13. The IP telephone set according to claim 1,
wherein
said first identification information of said first external apparatus is a MAC address.

14. The IP telephone set according to claim 1, wherein
said first external apparatus is a computer.

15. The IP telephone set according to claim 14, wherein
said computer is a portable computer.
